# EUROPÄISCHE PATENTANMELDUNG

(11) **EP 4 659 949 A2**
(43) Veröffentlichungstag der Anmeldung: **10.12.2025**
(21) Anmeldenummer: 25174449.6
(22) Anmeldetag: 06.05.2025
(51) Int. Cl.: B32B 1/08, B32B 27/32, C08L 23/14, F16L 9/00, F16L 9/133

(54) **KUNSTSTOFF ZUR AUSBILDUNG EINER ROHRLEITUNG**

(30) Priorität: 14.05.2024 DE 102024113376
(71) Anmelder: Bänninger Kunststoff-Produkte GmbH Reiskirchen, 35447 Reiskirchen (DE)
(72) Erfinder: Falley, Norbert Werner Herrmann, 67595 Bechtheim (DE)
(74) Vertreter: advotec.

(57) **Zusammenfassung**

Die Erfindung betrifft die Verwendung eines Kunststoffs zur Ausbildung einer Rohrleitung (10), eine Rohrleitung sowie ein Verfahren zur Herstellung einer Rohrleitung zur Förderung von Gasen und Druck, wobei als ein Kunststoff ein Polypropylen-Block-Copolymer (PP-B) verwendet wird.

## Beschreibung

Die Erfindung betrifft eine Verwendung eines Kunststoffs zur Ausbildung einer Rohrleitung, eine Rohrleitung aus diesem Kunststoff sowie ein Verfahren zur Herstellung einer Rohrleitung zur Förderung von Gasen unter Druck oder Flüssigkeiten unter 0°C.

Kunststoffrohre können in Art eines extrudierten, spritzgegossenen oder blasgeformten Rohrs ausgebildet sein und dienen zur Herstellung von Rohrleitungsnetzen für flüssige, pastöse oder gasförmige Medien. Rohrleitungen aus Kunststoff werden vielfach im Bereich der Trinkwasserversorgung, der Heizungstechnik, der Lebensmittelindustrie, dem Apparatebau sowie der chemischen Industrie verwendet. Eine Ausbildung von derartigen Rohrleitungsnetzen mittels Rohrleitungen erfolgt regelmäßig durch Verschweißen der Rohrleitungen untereinander oder mittels Formstücken bzw. Fittings. Wesentlich beim Verschweißen ist, dass die jeweiligen Rohrleitungen und Fittings an Oberflächen verschweißt werden, die frei von Füllstoffen sind und aus gleichartigen Kunststoffmaterialien ausgebildet sind, um ein möglichst gutes Schweißergebnis mit einer haltbaren und dichten Verbindung der Schweißpartner zu erzielen.

Rohrleitungen aus Kunststoff sind auch zur Förderung von Gasen verwendbar. Auch kann für einen Transport von Gasen, insbesondere Druckluft, auf eine Ausbildung einer Rohrleitung mit mehreren Schichten verzichtet werden da Gase bzw. Druckluft regelmäßig nicht ein Inneres der Rohrleitung angreifen bzw. aggressive Medien enthalten, wie dies bei Flüssigkeiten der Fall sein kann. Da Rohrleitungen aus Kunststoff kostengünstig herstellbar, gut verarbeitbar und schweißbar sind, ist es somit möglich aus einschichtigen Rohrleitungen vergleichsweise kostengünstig ein Rohrleitungsnetz zur Verteilung von beispielsweise Druckluft zur industriellen Anwendung auszubilden. Weiter ist bekannt, diese Rohrleitungen mit einer Wanddicke auszubilden, die zumindest einen Druck von 16 bar bei 20°C widersteht. Eine Verwendung von Füllstoffen ist hier nicht vorgesehen, da diese eine Stabilität der Rohrleitung mindern und damit eine höhere Wanddicke erfordern würden. Weiter können derartige Rohrleitungen eine Deckschicht zum äußeren Schutz der Rohrleitung aufweisen.

Eine mehrschichtige Rohrleitung für Flüssigkeiten aus Polypropylen ist beispielsweise aus der DE 10 2007 030 914 A1 bekannt. Rohre aus Polypropylen sind unter anderem mit der DIN 8077 und DIN 8078 in der am Prioritätstag gültigen Fassung genormt. Polypropylen wird regelmäßig zur Herstellung von Rohrleitungen für beispielsweise für erdverlegte drucklose Abwasserkanäle und -leitungen verwendet.

Es hat sich jedoch herausgestellt, dass insbesondere bei Rohrleitungen zur Förderung von Gasen unter Druck, wie beispielsweise Druckluftleitungen eine Leckage an einer Rohrleitung, bei der dann Gas oder Druckluft aus der Rohrleitung austritt, ohne Weiteres auch zu einem Bruch der Rohrleitung an dieser Stelle führen kann. Dies ist insbesondere dann der Fall, wenn es zu einer unbeabsichtigten Beschädigung der Rohrleitung infolge eines beispielsweise Betriebsablaufs innerhalb einer industriellen Anlage kommt. Aufgrund der durch die expandierenden Gase entstehenden tiefen Temperaturen können herkömmliche Rohrleitungen aus Kunststoff verspröden und splittern. Auch können die Splitter leicht in der Nähe der Rohrleitung befindliche Personen verletzen. Polypropylen hat sich daher als ein weniger geeigneter Werkstoff für oberirdisch verlegte Gas- bzw. Druckluftleitungen erwiesen. Ebenfalls tritt eine die Gebrauchstauglichkeit stark einschränkende Versprödung von Polypropylen bei dauerhaft niedrigen bzw. tiefen Temperaturen unter dem Gefrierpunkt durch beispielsweise den Transport von Kühlflüssigkeiten auf.

Es ist daher Aufgabe der Erfindung einen Kunststoff zur Ausbildung einer Rohrleitung zur Förderung von Gasen unter Druck oder Flüssigkeiten unter 0°C sowie eine Rohrleitung aus diesem Kunststoff vorzuschlagen, der bzw. die die aus dem Stand der Technik bekannten Nachteile überwindet und dennoch eine einfache und kostengünstige Ausbildung eines Rohrleitungsnetzes ermöglicht.

Diese Aufgabe wird durch eine Verwendung eines Kunststoffs mit den Merkmalen des Anspruchs 1, eine Rohrleitung mit den Merkmalen des Anspruchs 16, ein Rohrleitungsnetz mit den Merkmalen des Anspruchs 17 und ein Verfahren mit den Merkmalen des Anspruchs 18 gelöst.

Erfindungsgemäß wird als Kunststoff zur Ausbildung einer Rohrleitung zur Förderung von Gasen unter Druck oder Flüssigkeiten unter 0°C ein Polypropylen-Block-Copolymer (PP-B) verwendet. Durch die Verwendung von Polypropylen-Block-Copolymer zur Ausbildung der Rohrleitung bzw. Druckrohrleitung für Gase bzw. Druckluft oder Flüssigleiten mit Temperaturen von ≤ 0°C wird es möglich, die Rohrleitung wesentlich widerstandsfähiger auszubilden. Polypropylen ist zwar ein vergleichsweise schlagzäher Kunststoff, jedoch hat sich herausgestellt, dass insbesondere bei einem Austritt eines Gases aus einer Rohrleitung unter Druck aus Polypropylen schnell an einer Austrittsstelle, aufgrund einer Expansion des Gases an dieser Stelle, eine Temperatur an der Austrittsstelle infolge der Expansion stark vermindert wird. Infolgedessen kann es auch leicht zur einer Abkühlung bzw. Vereisung der Austrittsstelle bzw. des betroffenen Rohrabschnitts kommen. Das Polypropylen wird dann spröde, sodass es aufgrund eines in der Rohrleitung anstehenden Gasdrucks oder Spannungen in der Rohrleitung leicht zu einem Bruch der Rohrleitung an dieser Stelle kommen kann. Eine vergleichbare Versprödung von Polypropylen tritt bei dem Transport von Flüssigkeiten mit Temperaturen unter 0°C, insbesondere bei Temperaturen von -20°C und darunter für die Anwendung in Tiefkühleinrichtungen, auf. Damit ist die Gefahr durch Beschädigungen durch bereits vergleichsweise geringe mechanische Einwirkungen, wie sie sich im Alltagsbetrieb ergeben können, gegeben. Die Verwendung des modifizierten Polypropylen-Block-Copolymer beseitigt diese Nachteile.

Überraschenderweise hat sich herausgestellt, dass sich modifiziertes Polypropylen-Block-Copolymer wesentlich besser zur Ausbildung von Rohrleitungen zur Förderungen von Flüssigkeiten mit Temperaturen von -20°C und tiefer sowie von Gasen und Druckluft eignet, da hier selbst bei einer Vereisung der Rohrleitung nicht zwangsläufig ein Bruch der Rohrleitung auftritt. Gleichzeitig kann dieser Kunststoff, wie auch einfaches Polypropylen, kostengünstig zu Rohrleitungen verarbeitet und zur Herstellung von Rohrleitungsnetzen für beispielsweise Kälteleitungen oder Druckluftanwendungen in der üblichen Weise kostengünstig eingesetzt werden. Wie sich gezeigt hat, ist der modifizierte Polypropylen-Block-Copolymer auch noch bei Temperaturen unter -20°C vergleichsweise schlagzäh, sodass es bei einer äußeren Schlageinwirkung oder einer Leckage einer derartigen Rohrleitung nicht ohne Weiteres zu einem Bruch der Rohrleitung kommt. Darüber hinaus kann die Gefahr eines Splitterns der Rohrleitung ebenfalls gemindert werden. Eine Kennzeichnung des Polypropylens ist nach ISO 1873 in der am Prioritätstag gültigen Fassung genormt.

Der Kunststoff kann ein Blend aus dem Copolymer und einem Homopolymer sein. Folglich kann ein Kunststoff verwendet werden, bei dem es sich um eine heterophasische Mischung aus Homopolymeren und Copolymeren handelt. Eine Schlagzähigkeit bei tiefen Temperaturen kann so wesentlich verbessert werden.

Der Blend kann bis zu 25 Gew.%, bevorzugt 3 bis 18 Gew.%, Elastomer oder Kautschuk aufweisen. Gummi bzw. der Elastomer oder Kautschuk kann eine Molekülkette des Polypropylen abschnittsweise unterbrechen und so eine Schlagzähigkeit des Polypropylen bei niedrigen Temperaturen weiter verbessern. Wie sich gezeigt hat kann mit einem Anteil von 3 bis 18 Gew.% eine vorteilhafte Anpassung von Druckfestigkeit und Schlagzähigkeit eingestellt werden. Es ist dann auch möglich, dass die Rohrleitung nicht nur bei niedrigeren Temperaturen für die Förderung von Gasen unter Druck einsetzbar wird, sondern im Falle einer Leckage, wenn die Rohrleitung vereisen sollte, weniger zum Bersten neigt.

Der Copolymer kann Ethylen, Buten-1 oder 4-Methylpenten-1 sein. Wie sich gezeigt hat, können diese Stoffe besonders vorteilhaft als Copolymere verwendet werden.

Der Kunststoff bzw. der Copolymer kann 3 Gew.% bis 20 Gew.% Polyethylen (PE) aufweisen. Durch die Verwendung von 3 Gew.% bis 20 Gew.% Polyethylen kann eine Glasübergangstemperatur wesentlich abgesenkt werden. Mit bereits bis zu 10 Gew.% Polyethylen kann die Schlagzähigkeit bei tiefen Temperaturen von -10°C bis -20°C wesentlich verbessert werden. Gleichwohl bleibt eine Kristallinität des Polypropylen bis zu einem Anteil von 20 Gew.% Polyethylen erhalten.

Der Kunststoff kann zumindest einen mineralischen Zuschlagsstoff aufweisen. Weitere, nicht mineralische Additive können mit einem Anteil von weniger als 1,5 Gew.% in dem Kunststoff enthalten sein.

Vorteilhaft kann der Kunststoff bis zu 20 Gew.% Talkum und/oder Fasern aufweisen. Die Fasern können Steinfasern, Glasfasern oder Kohlenstofffasern sein. Auch kann vorgesehen sein, dass die Fasern mit einem Haftvermittler, einer sogenannten Schlichte, imprägniert sind. Prinzipiell können alle Arten von Fasern zur Minderung einer Längenänderung der Rohrleitung infolge Temperaturänderungen zugesetzt werden. Die Fasern können Kurzfasern mit bis zu 6 mm, vorzugsweise bis zu 4 mm Länge sein. Fasern dieser Länge sind noch gut extrudierbar und können dem Polypropylen-Block-Copolymer einfach beigemischt werden. Die Fasern können eine Längenänderung einer Rohrleitung im Vergleich zu einer Rohrleitung aus Polypropylen ohne Fasern um bis zu 70 %, zumindest um bis zu 50 % vermindern.

Der Kunststoff kann bis zu 2 Gew.% Titandioxid aufweisen. Durch die Verwendung von Titandioxid in dem Kunststoff wird es möglich die Rohrleitung mit einem UV-Schutz auszubilden. Die Rohrleitung ist dann auch gegenüber Sonneneinstrahlung über einen längeren Zeitraum, beispielsweise zwei Jahre, exponierbar, ohne dass eine wesentliche Herabsetzung einer Festigkeit der Rohrleitung durch die UV-Strahlung der Sonne auftreten kann. Die Rohrleitung ist dann auch außerhalb von Gebäuden oder sonnengeschützten Bereichen nutzbar.

Der Kunststoff kann eine Glasübergangstemperatur von < 0°C bis -20°C, bevorzugt bis -30°C, besonders bevorzugt bis -40°C, aufweisen. Die Rohrleitung kann dann bis zu diesen Temperaturen verwendet werden, sodass die Rohrleitung auch zum Transport kalter Gase und in Kältebereichen eingesetzt werden kann.

Die Rohrleitung kann eine mit einem Gas gefüllte Druckrohrleitung, ausgebildet für einen Druck von bis zu 10 bar, bei bis zu 40°C, bevorzugt 16 bar, bei bis zu 0°C oder niedriger, besonders bevorzugt 20 bar, bei bis zu 0°C oder niedriger, sein. Der Kunststoff kann dann zur Herstellung dieser Rohrleitung verwendet werden.

Die Rohrleitung kann eine mit einer Flüssigkeit gefüllte Rohrleitung, ausgebildet für eine Temperatur von 0°C, bevorzugt -20°C, besonders bevorzugt -30°C oder tiefer, sein. Der Kunststoff kann dann zur Herstellung dieser Rohrleitung verwendet werden. So können Rohrleitungen aus dem Kunststoff zum Transport von Kühl- bzw. Kälteflüssigkeiten verwendet werden. Es kann auch für diese Anwendungen auf eine mehrschichtige Ausbildung der Rohrleitungen verzichtet werden. Derartige Rohrleitungsnetze können zum Beispiel für die Verteilung von Kältemitteln/ -flüssigkeiten mit Temperaturen von -20°C und tiefer in Kühlhäusern verwendet werden.

Die Rohrleitung kann mit einem im Querschnitt mehrschichtigen Aufbau ausgebildet sein, wobei zumindest eine Schicht, bevorzugt alle Schichten, aus dem Kunststoff ausgebildet sein können. Folglich kann der Kunststoff für eine mehrschichtige Rohrleitung, die teilweise oder vollständig aus dem Kunststoff besteht, verwendet werden. Insbesondere kann die Rohrleitung zwei Schichten, drei Schichten, vier Schichten, fünf Schichten oder mehr Schichten aufweisen.

Die Rohrleitung kann mit einem im Querschnitt dreischichtigen Aufbau ausgebildet sein, wobei der Aufbau zumindest eine Außenschicht, eine Innenschicht und eine zwischenliegende Mittelschicht aufweist, wobei die Mittelschicht Fasern enthalten kann, wobei der Kunststoff der Außenschicht, der Innenschicht und der Mittelschicht der modifizierte Polypropylen-Block-Copolymer sein kann. Wenn die Mittelschicht Fasern enthält kann die Mittelschicht noch als eine tragende Schicht in Bezug auf eine Druckfestigkeit ausgebildet sein. Eine Steigerung des Faseranteils über 20 Gew.% kann hingegen eine Längenänderung infolge Temperaturänderung nicht mehr wesentlich beeinflussen, jedoch eine Druckfestigkeit der Rohrleitung herabsetzen. Eine Schichtdicke der Außenschicht, der Innenschicht und der Mittelschicht kann übereinstimmend ausgebildet sein. Grundsätzlich ist es jedoch auch möglich, dass die Außenschicht, die Innenschicht und die Mittelschicht jeweils unterschiedliche Schichtdicken aufweisen. Je nach Anforderung an die Rohrleitung kann die Rohrleitung dann auch aus Polypropylen mit unterschiedlichen Eigenschaften ausgebildet sein, beispielsweise mit der Außenschicht kratzfest für einen Schutz gegen Beschädigungen.

Die Außenschicht und/oder die Innenschicht kann frei von Füllstoffen sein. Wenn die Außenschicht frei von Füllstoffen ist, kann die Rohrleitung besonders gut mit einem Fitting oder dergleichen verschweißt werden, ohne dass Füllstoffe eine Festigkeit dieser Verbindung herabsetzen.

Die Rohrleitung kann einen Außendurchmesser von bis zu 110 mm aufweisen. Dabei muss die Rohrleitung für Gase, insbesondere Druckluft, nicht in den Geltungsbereich der EU Druckgeräterichtlinie 2014/68/EU fallen. So kann der Kunststoff für Rohrleitungen bis zu diesem Außendurchmesser verwendet werden. Die Rohrleitung kann prinzipiell mit jedem beliebigen Außendurchmesser entsprechend der für Druckrohrleitungen zum Zeitpunkt des Prioritätstags gültigen Normen ausgebildet sein. Unter einer Druckrohrleitung wird eine Rohrleitung verstanden, die einem Überdruck von zumindest 0,5 bar widerstehen kann.

Die erfindungsgemäße Rohrleitung aus Kunststoff zur Förderung von Gasen unter Druck oder Flüssigkeiten unter 0°C ist mit einem Kunststoff ausgebildet, der ein Polypropylen-Block-Copolymer (PP-B) ist. Zu den Vorteilen der erfindungsgemäßen Rohrleitung wird auf die Vorteilsbeschreibung der erfindungsgemäßen Verwendung verwiesen.

Weitere vorteilhafte Ausführungsformen einer Rohrleitung ergeben sich aus den Merkmalsbeschreibungen der auf den Anspruch 1 zurückbezogenen Unteransprüche.

Das erfindungsgemäße Rohrleitungsnetz umfasst eine erfindungsgemäße Rohrleitung und ein an die Rohrleitung angeschlossenes Formstück aus einem Polypropylen-Block-Copolymer (PP-B), wobei das Formstück mit der Rohrleitung verschweißt ist. Das Formstück kann beispielsweise ein Fitting sein, der aus reinen Polypropylen-Block-Copolymer besteht und einen im Querschnitt einschichtigen Aufbau aufweist. Da Formstücke gegenüber Rohrleitungen vergleichsweise kurz sind bzw. eine um ein Vielfaches geringere Länge aufweisen, ist eine eventuelle Längenänderung des Formstücks nicht von Bedeutung, weshalb das Formstück frei von Fasern ausgebildet sein kann.

Bei dem erfindungsgemäßen Verfahren zur Herstellung einer Rohrleitung aus Kunststoff wird die Rohrleitung mittels Extrusion oder Spritzgießen eines Polypropylen-Block-Copolymers ausgebildet. Hinsichtlich der Vorteile des erfindungsgemäßen Verfahrens wird auf die Vorteilsbeschreibung der erfindungsgemäßen Verwendung verwiesen. Weitere vorteilhafte Ausführungsformen des Verfahrens ergeben sich aus den Merkmalsbeschreibungen der auf den Anspruch 1 zurückbezogenen Unteransprüche.

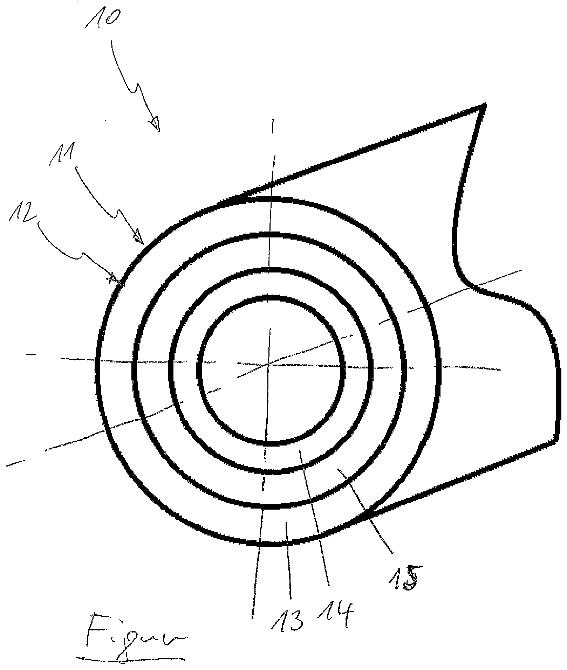

Nachfolgend wird die Erfindung unter Bezugnahme auf die beigefügte Zeichnung näher erläutert.

Die **Figur** zeigt eine schematische Darstellung einer Rohrleitung 10 in einer Querschnittansicht. Die Rohrleitung 10 ist aus Kunststoff ausgebildet und weist einen dreischichtigen Aufbau 11 ihrer Wandung 12 auf. Prinzipiell kann die Rohrleitung jedoch auch einen einschichtigen oder zweischichtigen Aufbau aufweisen. Das hier dargestellt Ausführungsbeispiel der Erfindung ist nicht auf eine dreischichtige Ausführung der Rohrleitung limitiert.

Der hier dargestellte Aufbau 11 umfasst eine Außenschicht 13, eine Innenschicht 14 und eine Mittelschicht 15. Der Kunststoff der Außenschicht 13, der Innenschicht 14 und der Mittelschicht 15 ist ein modifizierter Polypropylen-Block-Copolymer (PP-B), wobei die Mittelschicht 15 einen mineralischen Zuschlagsstoff bzw. Fasern enthält. Das Polypropylen-Block-Copolymer (PP-B) der Außenschicht 13 weist einen Anteil an Titandioxid auf. Das Polypropylen-Block-Copolymer (PP-B) der Innenschicht 14 ist hingegen frei von Füllstoffen. Wesentlich ist, dass zumindest die Außenschicht 13, die Innenschicht 14 und/oder die Mittelschicht 15 aus dem Polypropylen-Block-Copolymer (PP-B) ausgebildet ist.

## Patentansprüche

1. Verwendung eines Kunststoffs zur Ausbildung einer Rohrleitung (10) zur Förderung von Gasen unter Druck oder Flüssigkeiten unter 0°C,
**dadurch gekennzeichnet,**
**dass** als ein Kunststoff ein Polypropylen-Block-Copolymer (PP-B) verwendet wird.

2. Verwendung nach Anspruch 1,
**dadurch gekennzeichnet,**
**dass** der Kunststoff ein Blend aus dem Copolymer und einem Homopolymer ist.

3. Verwendung nach Anspruch 2,
**dadurch gekennzeichnet,**
**dass** der Blend bis zu 25 Gew.%, bevorzugt 3 bis 18 Gew.%, Elastomer oder Kautschuk aufweist.

4. Verwendung nach einem der vorangehenden Ansprüche,
**dadurch gekennzeichnet,**
**dass** der Copolymer Ethylen, Buten-1 oder 4-Methylpenten-1 ist.

5. Verwendung nach Anspruch 4,
**dadurch gekennzeichnet,**
**dass** der Kunststoff 3 bis 20 Gew.% Polyethylen (PE) aufweist.

6. Verwendung nach einem der vorangehenden Ansprüche,
**dadurch gekennzeichnet,**
**dass** der Kunststoff zumindest einen mineralischen Zuschlagstoff aufweist.

7. Verwendung nach einem der vorangehenden Ansprüche,
**dadurch gekennzeichnet,**
**dass** der Kunststoff bis zu 20 Gew.% Talkum und/oder Fasern aufweist.

8. Verwendung nach einem der vorangehenden Ansprüche,
**dadurch gekennzeichnet,**
**dass** der Kunststoff bis zu 2 Gew.% Titandioxid aufweist.

9. Verwendung nach einem der vorangehenden Ansprüche,
**dadurch gekennzeichnet,**
**dass** der Kunststoff eine Glasübergangstemperatur von < 0°C von bis zu -20°C, bevorzugt bis zu -30°C, besonders bevorzugt bis zu -40°C, aufweist.

10. Verwendung nach einem der vorangehenden Ansprüche,
**dadurch gekennzeichnet,**
**dass** die Rohrleitung (10) eine mit einem Gas gefüllte Druckrohrleitung, ausgebildet für einen Druck von bis zu 10 bar, bevorzugt 16 bar, besonders bevorzugt 20 bar, ist.

11. Verwendung nach einem der Ansprüche 1 bis 9,
**dadurch gekennzeichnet,**
**dass** die Rohrleitung (10) eine mit einer Flüssigkeit gefüllte Rohrleitung, ausgebildet für eine Temperatur von 0°C, bevorzugt -20°C, besonders bevorzugt -30°C, ist.

12. Verwendung nach einem der vorangehenden Ansprüche,
**dadurch gekennzeichnet,**
**dass** die Rohrleitung (10) mit einem im Querschnitt mehrschichtigen Aufbau (11) ausgebildet ist, wobei zumindest eine Schicht, bevorzugt alle Schichten, aus dem Kunststoff ausgebildet sind.

13. Verwendung nach Anspruch 12,
**dadurch gekennzeichnet,**
**dass** die Rohrleitung (10) mit einem im Querschnitt dreischichtigen Aufbau (11) ausgebildet ist, wobei der Aufbau zumindest eine Außenschicht (13), eine Innenschicht (14) und eine zwischenliegende Mittelschicht (15) aufweist, wobei die Mittelschicht Fasern enthält, wobei der Kunststoff der Außenschicht, der Innenschicht und der Mittelschicht der Polypropylen-Block-Copolymer (PP-B) ist.

14. Verwendung nach Anspruch 13,
**dadurch gekennzeichnet,**
**dass** die Außenschicht (13) und/oder die Innenschicht (14) frei von Füllstoffen ist.

15. Verwendung nach einem der vorangehenden Ansprüche,
**dadurch gekennzeichnet,**
**dass** die Rohrleitung (10) einen Außendurchmesser von bis zu 110 mm aufweist.

16. Rohrleitung (10) aus Kunststoff zur Förderung von Gasen unter Druck oder Flüssigkeiten unter 0°C,
**dadurch gekennzeichnet,**
**dass** der Kunststoff ein Polypropylen-Block-Copolymer (PP-B) ist.

17. Rohrleitungsnetz, umfassend eine Rohrleitung (10) nach Anspruch 16 und ein an die Rohrleitung angeschlossenes Formstück aus einem Polypropylen-Block-Copolymer (PP-B), wobei das Formstück mit der Rohrleitung verschweißt ist.

18. Verfahren zur Herstellung einer Rohrleitung (10) aus Kunststoff,
**dadurch gekennzeichnet,**
**dass** die Rohrleitung mittels Extrusion oder Spritzgießen eines Polypropylen-Block-Copolymer (PP-B) ausgebildet wird.
